# FASCICULE DE BREVET EUROPEEN

(11) **EP 2 601 009 B1**
(45) Date de publication et mention de la délivrance du brevet: **17.04.2019**
(21) Numéro de dépôt: 11754897.4
(22) Date de dépôt: 20.07.2011
(51) Int. Cl.: B23P 15/00, F01D 5/06, B23K 20/12

(54) **PROCÉDÉ DE FABRICATION D'UN TAMBOUR DE TURBOMACHINE ET TAMBOUR DE TURBOMACHINE**
VERFAHREN ZUR HERSTELLUNG EINER TURBOMASCHINENTROMMEL UND EINER TURBOMASCHINENTROMMEL
PROCESS FOR MANUFACTURING A TURBOMACHINE DRUM AND A TURBOMACHINE DRUM

(30) Priorité: 06.08.2010 FR 1056504
(43) Date de publication de la demande: 12.06.2013
(73) Titulaire: Safran Aircraft Engines, 75015 Paris (FR)
(72) Inventeur: BELMONTE, Olivier, F-77550 Moissy Cramayel Cedex (FR); WELLER, Lionel, René, Henri, F-77550 Moissy Cramayel Cedex (FR)
(74) Mandataire: Pichat, Thierry
(86) Numéro de dépôt international: PCT/FR2011/051753
(87) Numéro de publication internationale: WO 2012/017168

(56) Documents cités:
- EP-A1- 1 927 722
- FR-A1- 2 925 106
- FR-A5- 2 150 094
- US-A- 4 483 054
- US-A- 4 743 165
- US-A1- 2009 265 933

## Description

La présente invention concerne un procédé de fabrication d'un tambour de turbomachine, ainsi qu'un tel tambour équipant une turbine basse pression.

Un exemple de procédé et un exemple de tambour, correspondant respectivement au préambule de la revendication 1 et au préambule de la revendication 5, sont décrits dans le document US 4 743 165.

Dans la technique actuelle, un tambour de turbine basse pression comprend au moins deux disques de rotor coaxiaux reliés l'un à l'autre par une paroi de révolution coaxiale sensiblement cylindrique ou tronconique. Chaque tambour comporte une bride amont et une bride aval pour la fixation du tambour sur des tambours amont et aval, respectivement. La périphérie radialement externe de chaque disque comporte des alvéoles de montage axial et de retenue radiale de pieds d'aubes de rotor.

Des léchettes radiales sont formées sur la surface externe de la paroi de révolution et coopèrent par frottement avec des blocs de matière abradable pour former des joints d'étanchéité du type à labyrinthe. Ces blocs de matière sont portés par les périphéries radialement internes d'aubes de stator intercalées entres les aubes de rotor.

Ce tambour de turbine basse pression peut être réalisé par soudage à friction inertielle d'un disque amont avec un disque aval portant la paroi de révolution. La première étape consiste à former les alvéoles en périphérie externe du disque amont puis dans une seconde étape on met en rotation le disque amont portant la paroi de révolution et une poussée axiale est appliquée à ce second disque de manière à ce que l'extrémité libre de la paroi de révolution vienne se souder par friction inertielle avec le premier disque. Dans une dernière étape, on réalise par brochage les alvéoles de la périphérie externe du second disque.

Pour améliorer les performances de la turbine et diminuer les émissions sonores, il est connu de réaliser un couplage aérodynamique multi-étages entre deux aubages de rotor consécutifs séparés l'un de l'autre par un aubage de stator (également connu sous le terme anglais de « clocking »). Ce couplage consiste à positionner angulairement l'aubage de rotor aval par rapport à l'aubage de rotor amont de sorte que les sillages formés au niveau des bords de fuite des aubes amont viennent impacter avec une certaine tolérance sur les bords d'attaque des aubes aval. Ainsi, sur le tambour, cela amène à réaliser le brochage des alvéoles du disque aval de manière à ce qu'elles soient décalées en direction circonférentielle d'un certain angle par rapport aux alvéoles du disque amont. Un tel couplage aérodynamique est décrit en détail dans la demande antérieure FR 2 925 106 de la demanderesse.

Toutefois, ce positionnement angulaire prédéterminé des deux disques d'un tambour n'est possible que lorsque la périphérie externe du disque aval présente un diamètre nettement plus important que celui du disque amont pour que l'on puisse réaliser son brochage après soudage. Dans les configurations où les deux disques ont sensiblement le même diamètre, il est impossible de réaliser le brochage du second disque après soudage en raison de la longueur de l'outil de brochage. Dès lors, l'opération de brochage doit être réalisée avant soudure par friction et il n'est plus possible d'effectuer un positionnement angulaire précis des alvéoles du second disque par rapport aux alvéoles du premier disque.

De plus, dans la technique connue, la paroi de révolution est réalisée dans la même matière que les disques telle que par exemple du NC19FeNb ce qui ne permet pas de contrôler de manière précise le niveau d'effondrement de la matière (c'est-à-dire la quantité de matière se déformant sous l'effet de la température) au niveau de la zone de soudure. Il en résulte une imprécision sur le positionnement axial relatif des deux disques.

En outre, le document US 4 743 165, bien que décrivant un procédé d'assemblage de disques de rotor utilisant le soudage par friction inertiel, ne propose aucune solution technique permettant le couplage aérodynamique entre les aubages consécutifs de rotor de sorte à optimiser les performances de la turbomachine. En effet, ce document se limite à divulguer une position alignée des alvéoles des disques lors de l'assemblage, cette position ne permettant pas le couplage aérodynamique multi-étage entre les aubages de rotor consécutifs.

L'invention a notamment pour but d'apporter une solution simple, efficace et économique à au moins une partie de ces problèmes.

Elle a pour objet un procédé de fabrication d'un tambour permettant de réaliser un positionnement angulaire prédéterminé de deux disques d'un tambour, et ce quelle que soit la dimension radiale des disques.

A cette fin, le présent document propose un procédé de fabrication d'un tambour de turbomachine, comprenant au moins deux disques de rotor coaxiaux comportant chacun en périphérie externe des alvéoles de montage de pieds d'aubes, caractérisé en ce qu'il comprend les étapes consistant à :
- positionner coaxialement les deux disques à distance l'un de l'autre et dans une position angulaire prédéterminée l'un par rapport à l'autre,
- placer coaxialement une paroi de révolution entre les deux disques,
- entraîner en rotation la paroi de révolution autour de son axe, et
- déplacer axialement les disques vers la paroi de révolution en les maintenant dans la position angulaire prédéterminée l'un par rapport à l'autre pour mettre les disques en contact avec les extrémités de la paroi de révolution et ainsi réaliser un soudage par friction inertielle des disques sur la paroi de révolution.

En particulier, le procédé de fabrication propose que la position angulaire prédéterminée soit réalisée de manière à ce que les alvéoles du disque amont soient décalées en direction circonférentielle d'un angle prédéterminé par rapport aux alvéoles du disque aval pour réaliser un couplage aérodynamique multi-étages entre deux aubages de rotor consécutifs séparés l'un de l'autre par un aubage de stator.

A la différence de la technique antérieure, seule la paroi de révolution est entraînée en rotation, ce qui autorise un positionnement angulaire précis des deux disques l'un par rapport à l'autre et leur maintien dans cette position angulaire. Ainsi, il est possible de réaliser un couplage aérodynamique des disques d'un tambour quelle que soit leur dimension radiale, et en particulier lorsque les deux disques ont des dimensions radiales similaires.

Avantageusement, l'étape de soudage comprend une première phase où les disques frottent sur les extrémités de la paroi de révolution tournante durant le temps nécessaire pour que les zones de soudage atteignent leur température de forgeage et une seconde phase où une poussée axiale est appliquée à chaque disque pour réaliser la soudure.

Cette étape de soudage en deux phases permet tout d'abord de réaliser un réchauffement des zones à souder par frottement des extrémités de la paroi de révolution sur les disques puis de solidariser la paroi de révolution aux disques par application d'une poussée axiale. De cette manière, il est possible de mieux contrôler le positionnement axial relatif des disques en comparaison de la technique antérieure.

Selon une autre caractéristique de l'invention, le procédé consiste après soudage des disques, à usiner les zones soudées pour ramener leur épaisseur à une valeur prédéterminée.

Selon encore une autre caractéristique de l'invention, le procédé est mis en oeuvre sur des disques non équipés d'aubes.

Le document concerne également un tambour de turbomachine, tel qu'un tambour de turbine basse pression, comprenant deux disques de rotor coaxiaux reliés l'un à l'autre par une paroi de révolution, caractérisé en ce que les extrémités de la paroi de révolution sont fixées aux disques de rotor par soudure à friction inertielle par exécution du procédé décrit précédemment de manière à ce que les disques soient dans une position prédéterminée l'un par rapport à l'autre. En particulier, les deux disques comportent chacun en périphérie externe des alvéoles de montage de pieds d'aubes, et la position angulaire prédéterminée est telle que les alvéoles du disque amont soient décalées en direction circonférentielle d'un angle prédéterminé par rapport aux alvéoles du disque aval pour réaliser un couplage aérodynamique multi-étages entre deux aubages de rotor consécutifs séparés l'un de l'autre par un aubage de stator.

Avantageusement, la paroi de révolution est réalisée dans un matériau différent de celui des disques de rotor. Ceci est rendu possible par le fait que la paroi de révolution n'est initialement solidaire d'aucun des deux disques. Cela autorise l'utilisation d'un matériau moins coûteux pour la paroi de révolution que celui utilisé pour réaliser les disques, tel que par exemple un alliage à base nickel respectant des critères mécaniques moins élevés que l'alliage utilisé pour réaliser les disques.

Selon encore une autre caractéristique de l'invention, les disques et la paroi de révolution sont réalisés en alliage métallique à base nickel.

L'invention concerne encore une turbomachine, telle qu'un turboréacteur ou un turbopropulseur d'avion, comprenant au moins un tambour tel que décrit dans ce qui précède.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- les figures 1 et 2 sont des vues partielles en coupe de deux tambours de turbine basse pression selon la technique antérieure ;
- la figure 3 est une vue schématique partielle de l'assemblage d'un tambour de turbine basse pression selon l'invention.

De manière classique, une turbomachine comprend d'amont en aval des compresseurs basse et haute pression, une chambre de combustion éjectant les gaz brûlés dans une turbine haute pression puis une turbine basse pression.

La turbine basse pression comprend une pluralité de rangées d'aubes fixes 10 de stator agencées en alternance avec des aubes mobiles 12 de rotor.

Le rotor de la turbine est formé par plusieurs tambours 16 fixés les uns aux autres. Chaque tambour comprend deux disques coaxiaux amont 18 et aval 20 comportant chacun en périphérie externe des alvéoles 22 de montage axial et de retenue radiale de pied d'aubes 12, 14 de rotor. Chaque disque 18, 20 comprend un poireau d'équilibrage 24 dans sa partie radialement interne.

Les deux disques 18, 20 sont reliés l'un à l'autre par une paroi de révolution 26 comportant des léchettes 28 sur sa surface externe destinées à coopérer avec un bloc de matière abradable 30 porté par l'extrémité radialement interne d'une rangée d'aubes fixes 10 de stator intercalées entre deux rangées d'aubes mobiles 12, 14 portées par les disques 18, 20. Les extrémités radialement externes des aubes fixes 10 sont portées par un carter annulaire externe de la turbine (non représenté).

Le tambour 16 comprend une bride 32 formée sur le disque amont 18 et s'étendant vers l'amont et une bride aval 34 formée sur le disque aval 20 et s'étendant vers l'aval, pour la fixation du tambour 16 sur des tambours amont et aval, respectivement.

Dans la technique antérieure, pour réaliser un tambour 16, on fait subir au disque amont 18 une opération de brochage pour former les alvéoles 22 de sa périphérie externe puis celui-ci est maintenu fixe tandis que le disque aval 20 portant la paroi de révolution 26 est entraîné en rotation et déplacé axialement de manière à ce que l'extrémité libre amont de la paroi de révolution 26 vienne en contact avec le disque amont, afin de réaliser un cordon de soudure 36 par friction inertielle. Le disque aval 20 subit ensuite une opération de brochage pour former ses alvéoles 22 en périphérie externe.

La réalisation du brochage du disque aval 20 après sa fixation avec le disque amont 18 permet que les alvéoles 22 amont et aval soient positionnées angulairement l'une par rapport à l'autre dans une position prédéterminée choisie de manière à réaliser un couplage aérodynamique multi-étages comme mentionné précédemment.

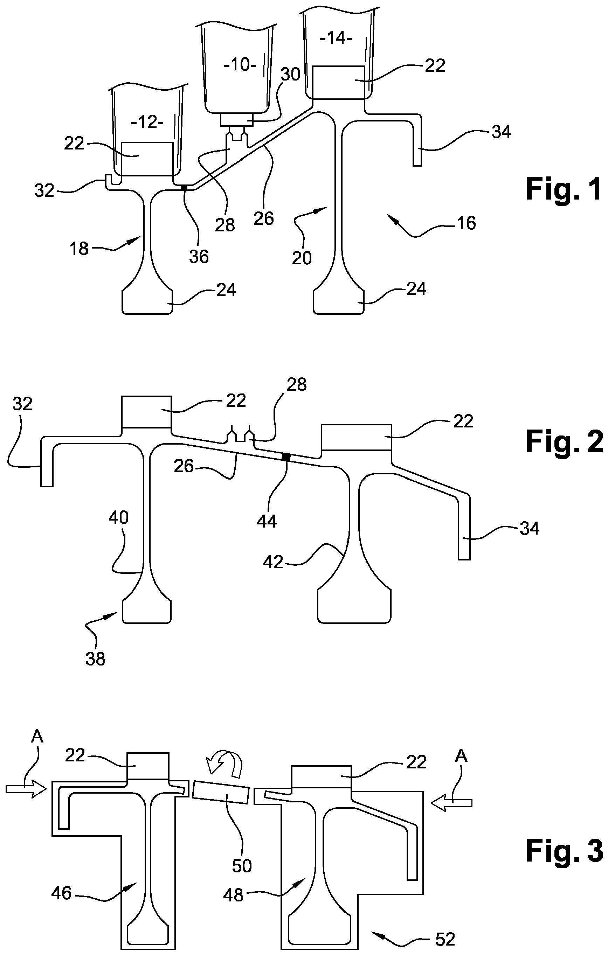

Toutefois, le brochage après le soudage n'est réalisable que dans un cas d'un tambour 16 tel que représenté en figure 1, où le disque amont 18 a un diamètre bien plus petit que celui du disque aval 20.

Dans le cas où les deux disques 40, 42 ont un diamètre similaire, comme représenté en figure 2, il est impossible de réaliser le brochage d'un des disques après soudage, ce qui ne permet pas d'optimiser les performances de la turbine et de diminuer les émissions sonores par couplage aérodynamique multi-étages.

L'invention permet de remédier à cet inconvénient ainsi qu'à ceux mentionnés précédemment utilisant une paroi de révolution indépendante des disques, en faisant tourner cette paroi et en mettant en contact les deux disques avec les extrémités de la paroi de révolution par déplacement axial des disques pour les souder à la paroi de révolution par friction inertielle.

Le procédé selon l'invention illustré schématiquement par la figure 3 consiste à placer coaxialement deux disques 46, 48 non équipés d'aubes à distance l'un de l'autre. Chaque disque 46, 48 comporte des alvéoles 22 en périphérie externe et les disques 46, 48 sont positionnés angulairement l'un par rapport à l'autre de manière à ce que les alvéoles 22 du disque amont 46 soient décalées en direction circonférentielle d'un angle prédéterminé par rapport aux alvéoles 22 du disque aval 48 pour optimiser les performances de la turbomachine.

Dans une seconde étape, une paroi de révolution 50 est placée coaxialement entre les deux disques 46, 48 et est entraînée en rotation autour de son axe.

Les deux disques 46, 48 sont ensuite soudés aux extrémités axiales de la paroi de révolution 50. Cette étape de soudage s'effectue en deux phases dont la première consiste à déplacer les disques 46, 48 en direction des extrémités de la paroi de révolution 50 jusqu'à ce qu'ils viennent frotter sur celles-ci. Cette première phase permet d'augmenter progressivement la température des zones de soudage jusqu'à leur température de forgeage. Dans une seconde phase, une poussée axiale (flèches A) est appliquée aux deux disques 46, 48 pour les appuyer sur la paroi de révolution 50 et ainsi réaliser une soudure par friction inertielle.

Le fait de dissocier la rotation et la translation sur deux pièces différentes, c'est-à-dire le fait de ne plus faire se déplacer la pièce tournante, permet de garantir un meilleur contrôle de la matière consommée au niveau des zones de soudage et donc un meilleur positionnement axial des deux disques 46, 48 l'un par rapport à l'autre. Ceci est encore amélioré par la réalisation d'une étape de soudage en deux phases distinctes comme décrit précédemment.

Le procédé selon l'invention conduit à la formation de bourrelets de soudure au niveau des extrémités soudées de la paroi de révolution 50 et à une augmentation de l'épaisseur de cette paroi. Celle-ci est ensuite usinée pour ramener son épaisseur à une valeur prédéterminée.

Dans certaines réalisations, les disques 46, 48 sont réalisés dans des alliages à base nickel connus pour leur résistance aux fortes températures telles que celle régnant dans une turbine. Toutefois, ce type de matériau est très coûteux. Le procédé selon l'invention permet d'utiliser une paroi de révolution 50 réalisée dans un matériau différent de celui des disques 46, 48 de turbine. Ainsi, la paroi de révolution 50 peut être réalisé dans un matériau moins coûteux que celui utilisé pour les disques 46, 48. Alternativement, il serait possible de réaliser les disques amont et aval et la paroi de révolution en un même matériau tel que par exemple l'alliage NC19FeNb. Toutefois, l'alliage utilisé pour réaliser la paroi de révolution peut respecter des critères mécaniques moins élevés, du fait d'un nombre de traitement par exemple thermique moins important, que ceux de l'alliage utilisé pour réaliser les disques.

Bien que le procédé selon l'invention a été décrit en référence à un tambour 52 de turbine basse pression, il est également applicable à un compresseur de turbomachine tel qu'un compresseur haute pression où les disques de rotor sont attachés ensemble d'une manière similaire.

## Revendications

1. Procédé de fabrication d'un tambour (52) de turbomachine, comprenant au moins deux disques (46, 48) de rotor coaxiaux comportant chacun en périphérie externe des alvéoles (22) de montage de pieds d'aubes, **caractérisé en ce qu'**il comprend les étapes consistant à :
- positionner coaxialement les deux disques (46, 48) à distance l'un de l'autre et dans une position angulaire prédéterminée l'un par rapport à l'autre de manière à ce que les alvéoles (22) du disque amont (46) soient décalées en direction circonférentielle d'un angle prédéterminé par rapport aux alvéoles (22) du disque aval (48) pour réaliser un couplage aérodynamique multi-étages entre deux aubages de rotor consécutifs séparés l'un de l'autre par un aubage de stator,
- placer coaxialement une paroi de révolution (50) entre les deux disques (46, 48),
- entraîner en rotation la paroi de révolution (50) autour de son axe, et
- déplacer axialement les disques (46, 48) vers la paroi de révolution (50) en les maintenant dans leur position angulaire prédéterminée l'un par rapport à l'autre pour mettre les disques (46, 48) en contact avec les extrémités de la paroi de révolution (50) et ainsi réaliser un soudage par friction inertielle des disques (46, 48) sur la paroi de révolution (50).

2. Procédé selon la revendication 1, **caractérisé en ce que** l'étape de soudage comprend une première phase où les disques (46, 48) frottent sur les extrémités de la paroi de révolution (50) tournante durant le temps nécessaire pour que les zones de soudage atteignent leur température de forgeage et une seconde phase où une poussée axiale est appliquée à chaque disque (46, 48) pour réaliser la soudure.

3. Procédé selon la revendication 1 ou 2, **caractérisé en ce qu'**il comprend, ensuite une étape d'usinage des zones soudées pour ramener leur épaisseur à une valeur prédéterminée.

4. Procédé selon l'une des revendications 1 à 3, **caractérisé en ce qu'**il est mis en oeuvre sur des disques (46, 48) non équipés d'aubes.

5. Tambour (52) de turbomachine, tel qu'un tambour de turbine basse pression, comprenant deux disques (46, 48) de rotor coaxiaux reliés l'un à l'autre par une paroi de révolution (50), comportant chacun en périphérie externe des alvéoles (22) de montage de pieds d'aubes, **caractérisé en ce que** les extrémités de la paroi de révolution (50) sont fixées aux disques (46, 48) de rotor par soudure par friction inertielle par exécution du procédé selon l'une des revendications 1 à 4 de manière à ce que les disques soient dans une position angulaire prédéterminée l'un par rapport à l'autre tel que les alvéoles (22) du disque amont (46) soient décalées en direction circonférentielle d'un angle prédéterminé par rapport aux alvéoles (22) du disque aval (48) pour réaliser un couplage aérodynamique multi-étages entre deux aubages de rotor consécutifs séparés l'un de l'autre par un aubage de stator.

6. Tambour selon la revendication 5, **caractérisé en ce que** la paroi de révolution (50) est réalisée dans un matériau différent de celui des disques de rotor (46, 48).

7. Tambour selon la revendication 5 ou 6, **caractérisé en ce que** les disques (46, 48) sont réalisés en alliage métallique à base nickel.

8. Tambour selon l'une des revendications 5 à 7, **caractérisé en ce que** la paroi de révolution (50) est réalisée en alliage métallique à base nickel.

9. Turbomachine, telle qu'un turboréacteur ou un turbopropulseur d'avion, **caractérisée en ce qu'**elle comprend au moins un tambour selon l'une des revendications 5 à 8.

## Patentansprüche

1. Verfahren zum Herstellen einer Trommel (52) für Turbotriebwerke, enthaltend zumindest zwei koaxiale Rotorscheiben (46, 48), die jeweils am äußeren Umfang Mulden (22) zum Montieren von Schaufelfüssen aufweisen, **dadurch gekennzeichnet, dass** es die nachstehenden Schritte umfasst:
- koaxiales Positionieren der beiden Scheiben (46, 48) in einem Abstand voneinander und in einer vorbestimmten Winkelposition zueinander, so dass die Mulden (22) der stromaufwärts liegenden Scheibe (46) in Umfangsrichtung um einen vorbestimmten Winkel gegenüber den Mulden (22) der stromabwärts liegenden Scheibe (48) versetzt sind, um eine mehrstufige aerodynamische Kopplung zwischen zwei aufeinanderfolgenden Rotorbeschaufelungen zu erstellen, die durch eine Statorbeschaufelung voneinander getrennt sind,
- koaxiales Anordnen einer Rotationswand (50) zwischen den beiden Scheiben (46, 48),
- drehendes Antreiben der Rotationswand (50) um ihre Achse und
- axiales Verlagern der Scheiben (46, 48) zur Rotationswand (50) hin, indem sie in ihrer vorbestimmten Winkelposition zueinander gehalten werden, um die Scheiben (46, 48) mit den Enden der Rotationswand (50) in Kontakt zu bringen und so ein Trägheitsreibschweißen der Scheiben (46, 48) an der Rotationswand (50) durchzuführen.

2. Verfahren nach Anspruch 1, **dadurch gekennzeichnet, dass** der Schritt des Schweißens eine erste Phase umfasst, wo die Scheiben (46, 48) an den Enden der Rotationswand (50) reiben, die sich während der Zeit dreht, die erforderlich ist, damit die Schweißbereiche ihre Schmiedetemperatur erreichen, sowie eine zweite Phase, wo eine axiale Schubkraft auf jede Scheibe (46, 48) aufgebracht wird, um die Schweißnaht herzustellen.

3. Verfahren nach Anspruch 1 oder 2, **dadurch gekennzeichnet, dass** es dann einen Schritt des spanenden Bearbeitens der verschweißten Bereiche umfasst, um deren Dicke auf einen vorbestimmten Wert zu bringen.

4. Verfahren nach einem der Ansprüche 1 bis 3, **dadurch gekennzeichnet, dass** es an unbeschaufelten Scheiben (46, 48) durchgeführt wird.

5. Trommel (52) für Turbotriebwerke, wie etwa Niederdruckturbinentrommel, enthaltend zwei koaxiale Rotorscheiben (46, 48), die durch eine Rotationswand (50) miteinander verbunden sind, die jeweils am äußeren Umfang Mulden (22) zum Montieren von Schaufelfüssen aufweisen, **dadurch gekennzeichnet, dass** die Enden der Rotationswand (50) durch Trägheitsreibschweißen mit Durchführung des Verfahrens nach einem der Ansprüche 1 bis 4 an die Rotorscheiben (46, 48) so befestigt sind, dass die Scheiben in einer vorbestimmten Winkelposition zueinander liegen, so dass die Mulden (22) der stromaufwärts liegenden Scheibe (46) in Umfangsrichtung um einen vorbestimmten Winkel gegenüber den Mulden (22) der stromabwärts liegenden Scheibe (48) versetzt sind, um eine mehrstufige aerodynamische Kopplung zwischen zwei aufeinanderfolgenden Rotorbeschaufelungen zu erstellen, die durch eine Statorbeschaufelung voneinander getrennt sind.

6. Trommel nach Anspruch 5, **dadurch gekennzeichnet, dass** die Rotationswand (50) aus einem anderen Material hergestellt ist als die Rotorscheiben (46, 48).

7. Trommel nach Anspruch 5 oder 6, **dadurch gekennzeichnet, dass** die Scheiben (46, 48) aus einer Metalllegierung auf Nickelbasis hergestellt sind.

8. Trommel nach einem der Ansprüche 5 bis 7, **dadurch gekennzeichnet, dass** die Rotationswand (50) aus einer Metalllegierung auf Nickelbasis hergestellt ist.

9. Turbotriebwerk, wie etwa Turbostrahltriebwerk oder Turboprop-Triebwerk für Flugzeuge, **dadurch gekennzeichnet, dass** es zumindest eine Trommel nach einem der Ansprüche 5 bis 8 aufweist.

## Claims

1. A method of fabricating a turbine engine drum (52), the drum comprising at least two rotor disks (46, 48) on a common axis, each having slots (22) in its outer periphery for receiving blade roots, the method being **characterized in that** it comprises the steps consisting in:
• positioning coaxially the two disks (46, 48) on a common axis spaced apart from each other and in a predetermined angular position relative to each other so that slots (22) of the upstream disk (46) are shifted circumferentially by a predetermined angle relative to slots (22) of the downstream disk (48) so as to achieve multi-stage aerodynamic coupling between two consecutive sets of rotor blades that are spaced apart from each other by a set of stator vanes;
• placing a wall (50) forming a body of revolution between the two disks (46, 48) coaxially about their common axis;
• driving the wall (50) in rotation about its axis; and
• moving the disks (46, 48) axially towards the wall (50) while maintaining them in their predetermined angular position relative to each other so as to put the disks (46, 48) into contact with the ends of the wall (50) and thereby weld the disks (46, 48) to the wall (50) by inertial friction welding.

2. A method according to claim 1, **characterized in that** the welding step comprises a first stage in which the disks (46, 48) rub against the ends of the rotating wall (50) during the time needed for the weld zones to reach their forging temperature, and a second stage in which axial thrust is applied to each of the disks (46, 48) in order to perform the welding.

3. A method according to claim 1 or claim 2, **characterized in that** it then includes a step of machining the weld zones in order to return their thickness to a predetermined value.

4. A method according to any one of claims 1 to 3, **characterized in that** it is performed on disks (46, 48) that do not have blades fitted thereto.

5. A turbine engine drum (52) such as a low-pressure turbine drum, comprising two rotor disks (46, 48) on a common axis connected to each other by a wall (50) forming a body of revolution, each having slots (22) in its outer periphery for receiving blade roots, the drum being **characterized in that** the ends of the wall (50) are fastened to the rotor disks (46, 48) by inertial friction welding by performing the method according to any one of claims 1 to 4 in such a manner that the disks are in a predetermined angular position relative to each other, so that slots (22) of the upstream disk (46) are shifted circumferentially by a predetermined angle relative to slots (22) of the downstream disk (48) so as to achieve multi-stage aerodynamic coupling between two consecutive sets of rotor blades that are spaced apart from each other by a set of stator vanes.

6. A drum according to claim 5, **characterized in that** the wall (50) is made of a material that is different from the material of the rotor disks (46, 48).

7. A drum according to claim 5 or claim 6, **characterized in that** the disks (46, 48) are made of a nickel-based metal alloy.

8. A drum according to any one of claims 5 to 7, **characterized in that** the wall (50) is made of a nickel-based alloy.

9. A turbine engine such as an airplane turboprop or turbojet, **characterized in that** it includes at least one drum according to any one of claims 5 to 8.
